# FASCICULE DE BREVET EUROPEEN

(11) **EP 1 064 872 B1**
(45) Date de publication et mention de la délivrance du brevet: **18.02.2004**
(21) Numéro de dépôt: 00420145.5
(22) Date de dépôt: 30.06.2000
(51) Int. Cl.: A47J 36/12

(54) **Dispostif de maintien d'un couvercle sur un appareil de cuisson domestique**
Haltevorrichtung eines Deckels auf einem Hausgerät
Holding device for a cover on a domestic appliance

(30) Priorité: 01.07.1999 FR 9908738
(43) Date de publication de la demande: 03.01.2001
(73) Titulaire: Seb S.A., 69132 Ecully Cedex (FR)
(72) Inventeur: Legros, Jean-Michel Georges Roger, 21610 Fontaine Francaise (FR)
(74) Mandataire: Martin, Didier

(56) Documents cités:
- FR-A- 921 942
- FR-A- 1 180 244
- FR-A- 2 658 407
- US-A- 1 390 766
- US-A- 1 745 548

## Description

La présente invention se rapporte au domaine des appareils de cuisson domestique, du genre cuiseurs en général comportant un corps et un couvercle, et en particulier tels que des cuiseurs à riz, pourvus d'un dispositif de maintien du couvercle en position stable de dégagement de l'ouverture du corps, ledit couvercle étant maintenu grâce au dispositif de maintien sur et le long du corps.

La présente invention concerne un dispositif de maintien d'un couvercle en position stable de non-fermeture sur et le long du corps d'un appareil de cuisson domestique comprenant un logement situé le long du corps et dans lequel une partie du couvercle peut être insérée de manière à supporter et maintenir le couvercle en position stable de dégagement de l'ouverture du corps.

La présente invention concerne également directement un appareil de cuisson domestique équipé d'un dispositif de maintien d'un couvercle en position stable de non-fermeture du corps, l'invention concernant plus particulièrement, mais non exclusivement, un cuiseur à riz, de préférence électrique, pourvu d'un tel dispositif de maintien du couvercle.

Il est déjà connu de réaliser des dispositifs de maintien d'un couvercle en position stable de non-fermeture ou de dégagement du corps d'un appareil de cuisson domestique, de tels dispositifs étant disposés sur et le long du corps de l'appareil. Les dispositifs connus sont associés à chaque poignée du corps qui comporte un dégagement au-dessus de sa zone de fixation sur le corps de manière à former avec la paroi latérale du corps un espace libre formant un logement sensiblement vertical dans lequel une partie du couvercle peut être insérée. Le document FR-2658407 décrit un tel dispositif. Selon cette disposition, le couvercle se trouve dans une position stable, sensiblement verticale ou encore sensiblement parallèle à l'axe de symétrie du corps, position dans laquelle le couvercle dégage totalement l'ouverture du corps. Dans cette position, le couvercle est en appui par sa tranche contre le fond du logement d'une part, et en appui latéral contre le bord supérieur du corps et contre une surface d'appui de la poignée d'autre part, une telle disposition empêchant toute rotation du couvercle.

Les dispositifs connus réalisés selon ce principe permettent de dégager la partie supérieure du corps et d'y avoir ainsi accès facilement tout en procurant un moyen de maintien du couvercle évitant d'avoir recours à une simple dépose du couvercle sur un plan de travail annexe. De tels dispositifs facilitent en conséquence les conditions de travail de manière générale et procurent un gain de place évident, puisque le couvercle représente souvent une pièce de volume important que l'on peut souvent difficilement déposer à plat sur un plan de travail, faute de place disponible. Les dispositifs connus réalisés selon ce principe présentent néanmoins divers inconvénients, et en particulier celui de ne pas dégager suffisamment l'accès à l'ouverture de l'appareil et/ou de la cuve, puisque le couvercle est en appui contre le bord supérieur de l'appareil ou de la cuve, ce qui, sur le plan pratique, limite le dégagement autour du corps. De tels dispositifs souffrent également d'un autre inconvénient majeur qui réside dans l'écoulement libre de condensats le long de la face intérieure du couvercle, ces condensats pouvant ainsi ensuite s'écouler librement dans l'environnement de l'appareil sans possibilité de récupération.

Il a déjà été proposé de réaliser des dispositifs de maintien faisant intervenir des pièces métalliques rapportées sur des poignées permettant certes d'augmenter légèrement le dégagement de l'ouverture de l'appareil, mais présentant des inconvénients supplémentaires liés à une relative complexification de la fabrication impliquant une opération supplémentaire de pose et de fixation de la pièce rapportée et à une relative instabilité du couvercle qui, même dans sa position de maintien, est susceptible de se déplacer en cas de choc inopiné puis de tomber. Par ailleurs, le problème de la récupération des condensats n'est absolument pas résolu.

L'objet de la présente invention vise en conséquence à porter remède aux différents inconvénients énumérés précédemment et à proposer un nouveau dispositif de maintien d'un couvercle en position stable de dégagement de l'ouverture du corps principal d'un appareil de cuisson qui assure un dégagement optimal de l'appareil tout en présentant une excellente stabilité du couvercle ainsi qu'une pose et dépose du couvercle rapides et sûres.

Les objets assignés à l'invention visent également, de manière indépendante ou non du problème relatif à l'amélioration du dégagement de l'ouverture de l'appareil, à proposer un nouveau dispositif de maintien d'un couvercle permettant d'assurer la récupération des condensats liés à la position sensiblement verticale du couvercle.

Un autre objet de l'invention vise à proposer un nouveau dispositif de maintien d'un couvercle de conception particulièrement simplifiée et permettant un maniement particulièrement aisé et sûr du couvercle.

Un autre objet assigné à l'invention vise à proposer un nouveau dispositif de maintien d'un couvercle permettant d'assurer de manière régulière l'évacuation des condensats, et ce de manière simple.

Les différents objets assignés à l'invention sont atteints à l'aide d'un dispositif de maintien d'un couvercle en position stable de non-fermeture sur et le long du corps d'un appareil de cuisson domestique comprenant un logement situé le long du corps et dans lequel une partie du couvercle peut être insérée de manière à supporter et maintenir le couvercle en position stable de dégagement de l'ouverture de l'appareil, caractérisé en ce que le logement est formé dans un organe rapporté et fixé sur la paroi latérale du corps, ledit logement définissant au moins deux bases d'appui pour la partie du couvercle qui y est insérée, de manière à maintenir le couvercle entre les deux bases d'appui indépendamment du corps.

Les objets assignés à l'invention seront explicités plus en détail à la lecture de la description qui suit, à l'aide des dessins annexés ci-après, donnés à titre purement illustratifs et non limitatifs, dans lequel :
- la figure 1 montre, selon une vue en coupe transversale partielle, un dispositif de maintien d'un couvercle conforme à l'invention illustrant la mise en place d'un récupérateur de condensats.
- la figure 2 illustre, selon une vue en coupe transversale partielle, un dispositif de maintien d'un couvercle conforme à l'invention équipé d'un dispositif de récupérateur des condensats en position fixe.
- la figure 3 illustre, selon une vue partielle de dessus, un dispositif de maintien d'un couvercle conforme à l'invention.
- la figure 4 illustre, selon une vue en coupe transversale partielle, un détail de réalisation d'un récupérateur de condensats conforme à l'invention.
- la figure 5 illustre, selon une vue en coupe transversale partielle, une variante de réalisation d'un dispositif de maintien d'un couvercle conforme à l'invention.

Dans la description qui suit, le dispositif de maintien d'un couvercle conforme à l'invention sera décrit dans son application préférentielle, nullement limitative, en association avec un appareil de cuisson domestique constitué par un cuiseur à riz électrique. Bien évidemment, au sens de l'invention, le dispositif de maintien d'un couvercle conforme à l'invention ne saurait être limité à cette application particulière, le dispositif de maintien d'un couvercle conforme à l'invention trouvant au contraire son application dans tout type d'appareil de cuisson domestique, du genre cuiseur en général, dès l'instant qu'il comporte une cuve et un couvercle amovible susceptible d'être complètement désolidarisé de la cuve.

Le dispositif de maintien conforme à l'invention est en conséquence destiné à être associé à un appareil de cuisson domestique, du genre cuiseur à riz comportant un corps ou enveloppe extérieure 1, par exemple circulaire, réalisé en un matériau métallique et/ou plastique définissant un fond (non représenté aux figures), et une paroi extérieure 2 surmontée. Dans son application particulière aux cuiseurs à riz électriques, le corps 1 est associé à une cuve métallique, amovible ou non, destinée à être insérée dans le corps 1 et ouverte à sa partie supérieure. La cuve est associée à un dispositif de chauffe, comportant des résistances électriques (non représentées aux figures) susceptibles d'être connectées par le biais d'un système de connexion électrique, au réseau d'alimentation électrique. De manière également classique, un tel cuiseur à riz est pourvu d'un ensemble de commande et de thermostats et/ou fusibles ainsi que d'un système d'isolation thermique destiné à assurer le maintien au chaud de l'aliment dont on veut assurer la cuisson.

L'appareil de cuisson comporte également un couvercle 4, réalisé en matériau plastique ou métallique, destiné à recouvrir et fermer l'orifice supérieur 5 du corps 1 lors de la cuisson de l'aliment.

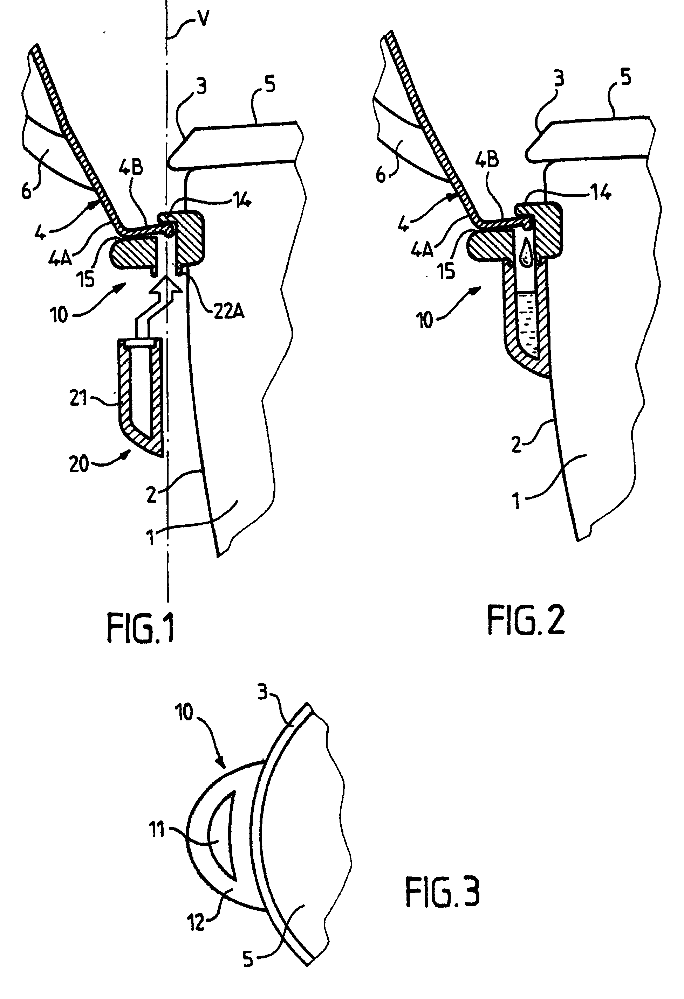

Tel que cela est illustré en particulier aux figures 1 et 2, le couvercle 4 peut comporter une section centrale 4A, par exemple sous la forme d'un disque circulaire, prolongé à sa périphérie par un bord tombé 4B. Le couvercle 4 peut également comporter un organe de préhension 6 solidaire de la face supérieure de la section 4A réalisée par exemple sous la forme d'une anse tel que cela est visible en partie aux figures 1 et 2.

Le dispositif de maintien conforme à l'invention est destiné à assurer le maintien et le support en position stable du couvercle 4 en position de non-fermeture ou de dégagement total de l'ouverture 5 de l'appareil de cuisson domestique, le couvercle 4 étant dans cette position stable maintenu et supporté sur et le long de la cuve 1.

A cette fin, le dispositif de maintien conforme à l'invention est réalisé sous la forme d'un organe 10 qui est rapporté et fixé sur la paroi extérieure 2 du corps, ledit organe 10 formant un logement 11.

Tel que cela est montré aux figures 1 à 3, l'organe 10 est avantageusement constitué par une poignée 12 fixée par tout moyen approprié, et par exemple par vissage ou rivetage sur la paroi extérieure 2. La poignée 12 peut être avantageusement réalisée en matériau plastique. Dans ce mode de réalisation, la poignée 12 comporte sensiblement dans sa partie centrale, une ouverture traversante ou non, formant le logement 11. Selon l'invention, le logement 11 définit au moins deux bases d'appui, situées de part et d'autre du logement 11 pour assurer le soutien en position stable de la partie du couvercle 4 qui est insérée dans le logement 11 de manière à maintenir le couvercle entre les deux bases d'appui indépendamment de la cuve 1, c'est-à-dire sans appui ni contact avec cette dernière. Chaque poignée 12 de l'appareil peut comporter un logement 11.

Ainsi, tel que cela est illustré aux figures 1 et 2, le couvercle 4 peut être inséré, par l'intermédiaire de sa tranche ou de son bord périphérique, et par exemple par son bord tombé 4B dans le logement 11 de manière à reposer en appui contre les bases d'appui, lesdites bases créant ainsi un couple résistant s'opposant au couple de rotation généré par le poids du couvercle lorsqu'il est en position dans le logement 11. Grâce à ce dispositif, le couvercle 4 peut occuper une position stable de dégagement de l'ouverture 5 sur et le long des parois 2.

Tel qu'illustré en particulier aux figures 1 et 2, les bases d'appui situées de part et d'autre du logement 11 comprennent une base d'appui interne 14 formée sur le bord de l'ouverture 11 adjacent au corps 1, et une base d'appui externe 15 formée du côté opposé sur l'ouverture 11. Selon cette disposition, la base d'appui interne 14 s'étend sensiblement radialement à partir de l'organe 10 formé par la poignée 12 et au-dessus du logement 11, alors que la base d'appui externe 15 est situé à un niveau inférieur à ladite base d'appui interne 14. La base d'appui interne 14 est ainsi formée par la surface inférieure de ladite base, la base d'appui externe 15 étant elle formée par la surface supérieure de la poignée 12. Cette disposition géométrique permet l'insertion de tout type de couvercle 4 indépendamment de sa forme ainsi que l'assurance d'une position stable et de dégagement du couvercle 4 hors de l'ouverture 5.

Selon l'invention, les bases d'appui 14 et 15 ainsi que la partie du couvercle destinée à venir en appui contre lesdites bases d'appui sont conformées de manière qu'en position stable de dégagement de l'ouverture 5, le couvercle soit incliné et écarté vers l'extérieur de la cuve au-delà de la vertical V (figure 1) passant par le bord extérieur 3 de l'ouverture 5 pour dégager l'ouverture 5.

Lorsque le dispositif de maintien conforme à l'invention est pourvu d'un logement 11 traversant, tel qu'illustré aux figures 1 à 3, le logement 11 peut comporter un fond constitué par un récupérateur de condensats 20.

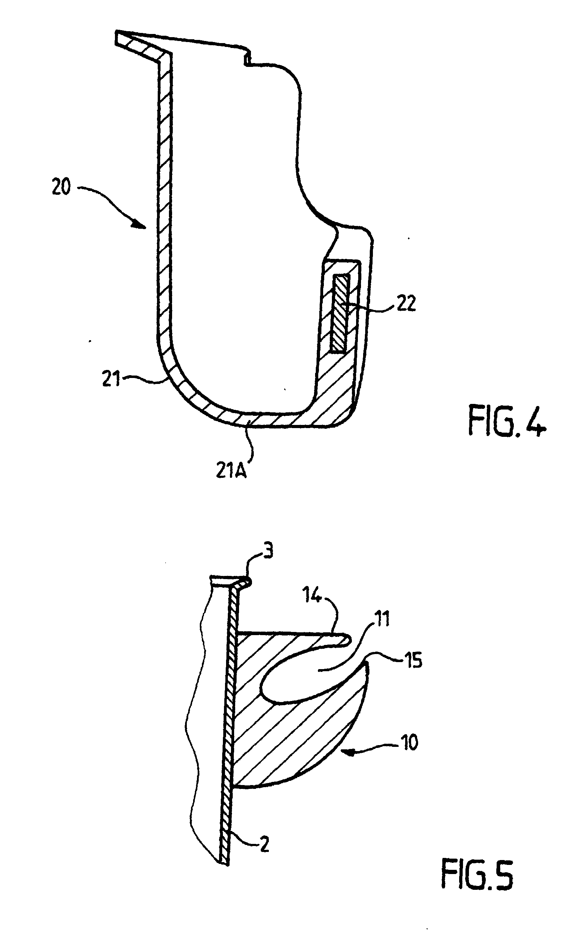

Avantageusement, le récupérateur de condensats 20 est formé par un récipient amovible 21 avec un fond 21A et ouvert à sa partie supérieure destiné à être fixé de manière amovible sur l'organe 10. De manière particulièrement avantageuse, le récipient amovible 21 est fixé sur le corps 1 par magnétisme lorsque le corps 1 est en matériau métallique. A cette fin, tel qu'illustré à la figure 4, le récipient 21 comprend dans une face destinée à venir en contact avec la paroi extérieure 2 du corps 1, un aimant 22 intégré dans sa masse et destiné à assurer la fixation sur la cuve 1. Selon cette réalisation, le récipient 21 est mis en place par l'utilisateur sous la poignée 12 et au droit du logement 11. Pour assurer le guidage et la mise en place étanche du récupérateur de condensats 20 sur la poignée 12, cette dernière est avantageusement pourvue à sa partie inférieure d'une collerette 22A entourant la périphérie inférieure du logement 11. La partie supérieure du récipient 21 est pourvue d'un rebord de profil conjugué à la collerette 22 afin d'assurer un guidage relatif des deux pièces ainsi qu'une mise en place étanche du récipient 21.

Grâce à ce montage, le récupérateur de condensats 20 se trouve plaqué sur la paroi externe 2 par l'aimant 22, la force magnétique développée étant déterminée pour ne pas dépendre du volume d'eau recueilli dans le récipient 21 tout en restant suffisamment faible pour être enlevé facilement pour nettoyage et vidange.

Bien évidemment, à titre de variante complémentaire, l'aimant 22 pourrait être intégré dans la paroi latérale 2 si cette dernière est en matériau plastique, le récipient 21 étant soit métallique, soit comportant des pièces métalliques.

A titre de variante complémentaire non représentée aux figures, le récupérateur de condensats 20 peut également être fixé sur le corps par tout moyen mécanique, sans avoir recours au magnétisme, tel que par clipsage notamment.

Le dispositif conforme à l'invention fonctionne de la manière suivante.

Lorsque l'utilisateur souhaite déposer le couvercle 4 hors de l'ouverture 5 sans avoir à le déposer sur un plan de travail annexe à l'appareil de cuisson, il saisit le couvercle 4 et l'insère dans le logement 11. La tranche du couvercle 4 ou le bord tombé 4B reposent donc par deux points d'appui entre et contre les bases d'appui interne 14 et externe 15 pour éviter ainsi toute rotation du couvercle sous son poids. Dans cette position, le couvercle 4 est au moins en position sensiblement verticale V et avantageusement dégagée vers l'extérieur de l'appareil au-delà de la position verticale considérée et passant par le bord extérieur de la cuve 3.

La possibilité de maintenir le couvercle 4 dans un logement 11 ménagé et formé directement dans un organe extérieur à la cuve et par conséquent sans contact direct avec la cuve, permet précisément d'éloigner le couvercle 4 de l'ouverture 5 pour définir un volume de dégagement supérieur autour de l'appareil. L'accès à l'appareil de cuisson est ainsi directement facilité et favorisé. Par ailleurs, la possibilité et facilité de mise en place (et d'enlèvement) d'un récupérateur de condensats directement intégré dans le logement de maintien du couvercle assure une maîtrise totale de l'évacuation et du stockage des condensats. Le recours au magnétisme pour assurer la fixation du récipient 21 s'avère une solution particulièrement simple à mettre en oeuvre sur le plan de la conception du produit. En outre, la mise en place et l'enlèvement du récipient 21 peut être réalisé par l'utilisateur sans difficulté.

A titre de variante de réalisation qui n'est couvert par les revendications mais est utile à la compréhension de l'invention, tel qu'illustré à la figure 5, l'organe 10 rapporté extérieurement sur la cuve 1 peut être constitué par une pièce indépendante des poignées d'une part, et comporter un logement 11 non traversant d'autre part.

## Revendications

1. Dispositif de maintien d'un couvercle en position stable de non fermeture sur et le long du corps (1) d'un appareil de cuisson domestique, ledit dispositif comprenant un logement (11) pouvant être placé le long du corps (1) et dans lequel une partie du couvercle (4) peut être insérée de manière à supporter et maintenir le couvercle (4) en position stable de dégagement de l'ouverture (5) de l'appareil (1), ledit logement (11) définissant au moins deux bases d'appui (14, 15) pour la partie du couvercle (4) qui y est insérée, de manière à maintenir le couvercle (4) entre les deux bases d'appui (14, 15) indépendamment du corps (1), ledit logement (11) étant formé dans un organe (10) pouvant être rapporté et fixé sur la paroi latérale (2) du corps (1), **caractérisé en ce que** le logement (11) comporte un fond fixé de manière amovible sur l'organe (10), ledit fond étant constitué par un récupérateur de condensats (20).

2. Dispositif selon la revendication 1 **caractérisé en ce que** le logement (11) est formé dans un organe (10) constitué par une poignée (12) du corps (1).

3. Dispositif selon l'une des revendications 1 ou 2 **caractérisé en ce que** les bases d'appui (14, 15) sont situées de part et d'autres du logement (11) et comprennent une base d'appui interne (14) s'étendant sensiblement radialement à partir de l'organe (10) et en partie au-dessus du logement (11) et une base d'appui externe (15) située à un niveau inférieur à la base d'appui interne (14).

4. Dispositif selon l'une des revendications 1 à 3 **caractérisé en ce que** les bases d'appui (14, 15) et la partie du couvercle (4) en appui sur ses dernières sont conformées de manière qu'en position stable de dégagement, le couvercle (4) soit incliné et écarté vers l'extérieur de la cuve (1) pour dégager l'ouverture (5) de la cuve (1).

5. Dispositif selon l'une quelconque des revendications 1 à 4 **caractérisé en ce que** le récupérateur de condensats (20) est formé par un récipient amovible (21).

6. Dispositif selon la revendication 5 **caractérisé en ce que** le récupérateur amovible (21) est fixé sur le corps (1) par magnétisme.

7. Dispositif selon la revendication 6 **caractérisé en ce que** le récipient amovible (21) comprend un aimant (22) intégré dans sa masse.

8. Appareil de cuisson domestique équipé d'un dispositif conforme à l'une des revendications 1 à 7.

9. Appareil de cuisson domestique selon la revendication 8 **caractérisé en ce qu'**il est constitué d'un cuiseur à riz.

## Claims

1. Device for holding a lid in a stable position of non-closure on and along the body (1) of a domestic cooking appliance, the said device comprising a housing (11) being able to be placed along the body (1) and in which part of the lid (4) can be inserted so as to support and hold the lid (4) in a stable position of leaving clear the opening (5) of the apparatus (1), the said housing (11) defining at least two support bases (14, 15) for the part of the lid (4) which is inserted therein, so as to hold the lid (4) between the two support bases (14, 15) independently of the body (1), the said housing (11) being formed in a member (10) able to be attached and fixed to the side wall (2) of the body (1), **characterised in that** the housing (11) has a bottom which is removably fixed to the member (10), the said bottom consisting of a condensate recuperator (20).

2. Device according to Claim 1, **characterised in that** the housing is formed in a member (10) comprising a handle (12) of the body (1).

3. Device according to one of Claims 1 or 2, **characterised in that** the support bases (14, 15) are situated on each side of the housing (11) and comprise an internal support base (14) extending substantially radially from the member (10) and partly above the housing (11) and an external support base (15) situated at a level lower than the internal support base (14).

4. Device according to one of Claims 1 to 3, **characterised in that** the support bases (14, 15) and the part of the lid (4) in abutment on the latter are formed so that, in a stable position of leaving clear, the cover (4) is inclined and moved away towards the outside of the vessel (1) in order to leave clear the opening (5) of the vessel (1).

5. Device according to any one of Claims 1 to 4, **characterised in that** the condensate recuperator (20) is formed by a removable receptacle (21).

6. Device according to Claim 5, **characterised in that** the removable recuperator (21) is fixed to the body (1) by magnetism.

7. Device according to Claim 6, **characterised in that** the removable receptacle (21) comprises a magnet (22) integrated in its mass.

8. Domestic cooking appliance equipped with a device according to one of Claims 1 to 7.

9. Domestic cooking appliance according to Claim 8, **characterised in that** it comprises a rice cooker.

## Patentansprüche

1. Haltevorrichtung eines Deckels in stabiler, nicht geschlossener Position auf und entlang des Körpers (1) eines häuslichen Kochgeräts, wobei dieses Gerät ein Behältnis (11) aufweist, das entlang dem Körper (1) angeordnet werden kann und in das ein Abschnitt des Deckels (4) so eingesetzt werden kann, dass der Deckel (4) in stabiler Nichteingriffs-Position der Öffnung (5) des Geräts (1) getragen und gehalten wird, wobei das Behältnis (11) mindestens zwei Stützen (14, 15) bildet für den Abschnitt des Deckels (4), der darin so eingesetzt ist, dass der Deckel (4) unabhängig vom Körper (1) gehalten ist zwischen den zwei Stützen (14, 15), und das Behältnis (11) in einem Element (10) gebildet ist, das auf der seitlichen Wand (2) des Körpers (1) bewegt und befestigt werden kann, **dadurch gekennzeichnet, daß** das Behältnis (11) einen Boden aufweist, der auf unbewegliche Weise am Element (10) befestigt ist, wobei dieser Boden gebildet ist aus einer Kondensat-Rückgewinnung (20).

2. Vorrichtung gemäß Anspruch 1, **dadurch gekennzeichnet, daß** das Behältnis (11) gebildet ist in einem Element (10), das einen Handgriff (12) des Körpers (1) bildet.

3. Vorrichtung gemäß einem der Ansprüche 1 oder 2, **dadurch gekennzeichnet, daß** die Stützen (14, 15) auf beiden Seiten des Behältnisses (11) angeordnet sind und eine innere Stütze (14), die sich im wesentlichen radial ausgehend vom Element (10) und teilweise über dem Behältnis (11) erstreckt, und eine äußere Stütze (15), die unterhalb von der inneren Stütze (14) angeordnet ist, umfassen.

4. Vorrichtung gemäß einem der Ansprüche 1 bis 3, **dadurch gekennzeichnet, daß** die Stützen (14, 15) und der Abschnitt des sich auf den letzteren abstützenden Deckels (4) so angepaßt sind, daß der Deckel (4) in stabiler Nichteingriffs-Position geneigt und beabstandet ist nach aussen von dem Behälter (1), um die Öffnung (5) des Behälters (1) frei zu geben.

5. Vorrichtung gemäß einem der Ansprüche 1 bis 4, **dadurch gekennzeichnet, daß** die Kondensat-Rückgewinnung (20) aus einem unbeweglichen Behälter (21) gebildet ist.

6. Vorrichtung gemäß Anspruch 5, **dadurch gekennzeichnet, daß** der unbewegliche Behälter (21) magnetisch auf dem Körper (1) befestigt ist.

7. Vorrichtung gemäß Anspruch 6, **dadurch gekennzeichnet, daß** der unbewegliche Behälter (21) einen Magneten (22) aufweist, der in seine Masse eingebettet ist.

8. Haushalts-Kochgerät, das ausgestattet ist mit einer Vorrichtung gemäß einem der Ansprüche 1 bis 7.

9. Haushalts-Kochgerät gemäß Anspruch 8, **dadurch gekennzeichnet, daß** es als Reiskocher ausgebildet ist.
